# EUROPEAN PATENT SPECIFICATION

(11) **EP 1 060 860 B1**
(45) Date of publication and mention of the grant of the patent: **21.05.2003**
(21) Application number: 99830364.8
(22) Date of filing: 14.06.1999
(51) Int. Cl.: B29C 44/14, B29C 44/34, B60N 2/44

(54) **A process for manufacturing padded upholstery**
Verfahren zum Herstellen von Polsterkörpern
Méthode pour la fabrication de pièces rembourrées

(43) Date of publication of application: 20.12.2000
(73) Proprietor: Casa del Sedile S.n.C., di Roberto Bandieri & C., 41100 Modena, MO (IT)
(72) Inventor: Bandieri, Sergio, 41100 Modena (MO) (IT)
(74) Representative: Gotra, Stefano

(56) References cited:
- DE-A- 2 221 592
- GB-A- 1 402 718
- GB-A- 2 053 774
- US-A- 3 932 252
- US-A- 4 089 919
- US-A- 5 164 137
- US-A- 5 394 602
- US-A- 5 582 789
- US-A- 5 619 776
- US-A- 5 851 457

## Description

Specifically, though not exclusively, the invention can be usefully applied to the field of upholstery for vehicle cockpit insides (e.g. motor cars, earth-moving vehicles, tractors, road-working machines, agricultural machines, lift trucks and so on), in particular for making seat upholstery.

Reference is particularly made to a process for upholstery manufacture which produces a padded upholstery in foamed plastic materials.

US 3932252 discloses a process for the manufacture of composite foam and fabric articles, such as upholstery, as in the preamble of claim 1; the process includes coating one surface of the fabric and the pores therein with a strippable coating; the fabric is then placed in a mold with the coating against the inside of the mold and is pulled down into conformity with the mold by vacuum; a liquid polyurethane foam resin is poured in place behind the fabric and foamed to a flexible solid state; the article is removed from the mold and the coating is stripped to complete the process.

US 5851457 discloses a method for making upholstered articles including the step of positioning an air-impermeable cover assembly over a mold cavity of a molding apparatus, applying a vacuum to the fabric through a plurality of apertures in the walls defining the mold cavity to cause the fabric to conform to the shape of the mold cavity, depositing a foam precursor into the mold cavity, positioning an air-impermeable scrim over the foam, and allowing the foam precursor to expand to form the article; the method allows upholstered articles having an integrally attached cover assembly to be manufactured using a pour-in-place process which does not utilize abherents, while still preventing bonding of the foam core to the lid and/or other surfaces of the molding apparatus.

Known processes for realising upholstery of the above-mentioned type, especially for vehicle seats, can be improved upon in the fields of speed, simplicity, economy and quality of manufacture.

The main aim of the present invention is to provide a relatively simple and economical process for manufacturing padded upholstery, especially for vehicle seats.

An advantage of the invention is that an item of padded upholstery can be produced in a short time.

A further advantage of the invention is that a finished item of padded upholstery is particularly sturdy and resistant to wear.

A still further advantage is that an especially reliable process is made available, wherein the risk of production defects is relatively low.

These aims and others besides are all attained by the present invention, as it is characterised in the appended claims.

Further characteristics and advantages of the present invention will better emerge from the detailed description that follows of a preferred embodiment of the invention, illustrated by way of non-limiting example in the accompanying figures of the drawings, in which:
figure 1 is a schematic perspective view of a bottom die used during a phase of the process of the invention:
figure 2 is a schematic perspective view of a top die, used during a phase of the process of the invention and destined to couple with the bottom die of figure 1;
figure 3 shows, in a schematic and partial perspective view, a phase of the process which comprises the injection of foamed plastic material between the two half-dies of figures 1 and 2;
figure 4 shows a schematic section made according to a vertical plan section of the two half-dies in a closed position, one on top of the other, forming a cavity in which the plastic material is foamed;
figure 5 is a schematic and partial perspective view of the two half-dies in an open position following the extraction of the product there-from;
figure 6 shows the product after extraction from the dies.

With reference to the above figures, 1 and 2 denote two half-covers, respectively a lower and an upper cover, each of which might consist in a piece of bi-elastic flexible material, of a rectangular shape in the example shown, made, for example, of a textile material or leatherette or another material, but in any case suitable for use in production of upholstery for car insides, in particular in production of car seat upholstery. The material used for the half-covers 1 and 2 is preferably electro-weldable.

3 denotes a bottom die for moulding expanded plastic materials. 4 denotes a top die or cope for coupling with the bottom die 3. The two half-dies 3 and 4, when closed down one on the other, create a cavity in which the plastic material can be foamed or expanded. The shape of this moulding cavity should be suitable for production of a vehicle seat.

Two suction pumps 5 and 6 are operatively associated with the two half-dies 3 and 4, each of which suction pumps 5 and 6 has its intake at the bottom of the cavity afforded by each of the half-dies. The pumps 5 and 6 create a depression between the two bottom surfaces of the half-dies and the half-covers arranged on the half-dies, so that the half-covers adhere to the bottom surfaces of the half-dies and take on the shape thereof.

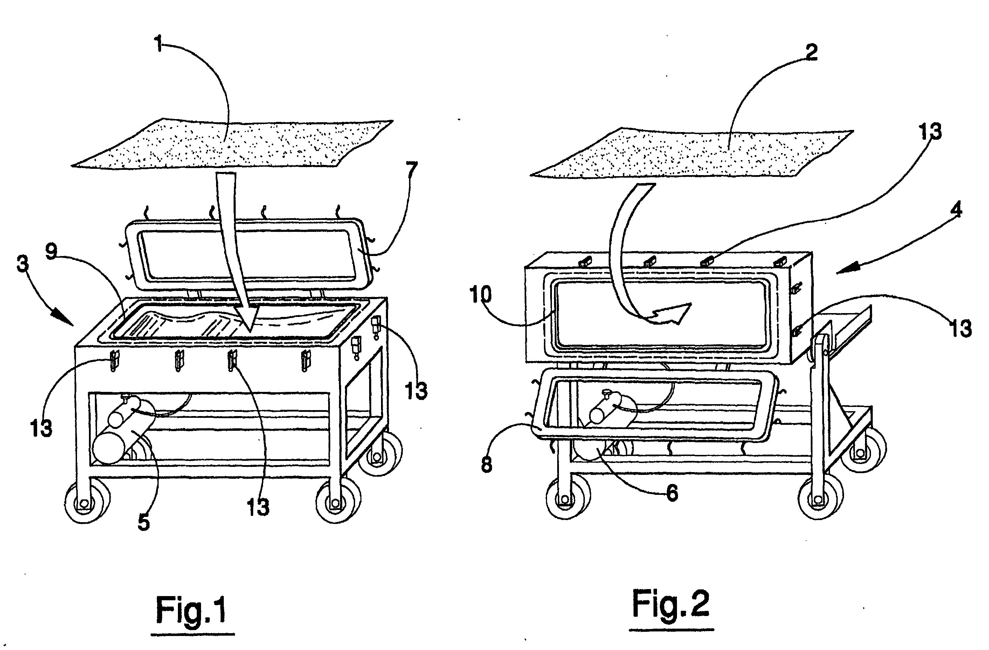

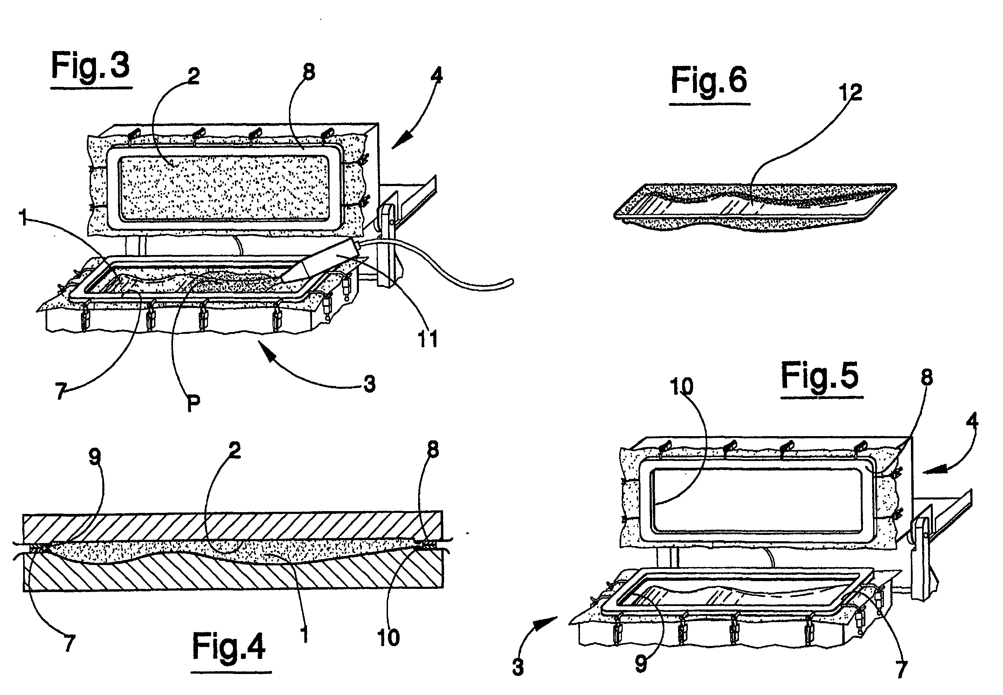

Each half-die 3 and 4 is provided with a stretch-frame, respectively 7 and 8, the internal edge of which is slightly larger than the size of the cavity in the half-dies. Each of the stretch-frames 7 and 8 is hinged to an edge of the half-die, rotatably about a horizontal rotation axis, and is thus able to assume at least one open position (figures 1 and 2) in which it is distanced from the cavity of the relative half-die in order to enable the half-cover to be arranged in the cavity, and a closed position (figures 3 to 5) in which the perimeter of the half-cover can be engaged in the cavity in order to be blocked into position.

The stretch-frames 7 and 8 are fixed removable to the periphery of the half-dies 3 and 4 using fixing means comprising a plurality of locking organs 13.

A welding element 9 and 10 is preferably positioned on each half-die 3 and 4, between the perimeter of the cavity and the stretch-frame 7 and 8, at the point where the half-cover is held in position, which welding element 9 and 10 will join the two half-covers preferably by means of low-frequency electro-welding.

The welding elements 9 and 10, when the half-dies are in the closed configuration, form a welding frame situated immediately outside the moulding cavity.

11 denotes a plastic material dispenser, for example a polyurethane dispenser, as polyurethane can be cold-expanded. 12 denotes a car seat cover made using the above-described equipment.

In the accompanying figures some phases of a process for manufacturing padded upholstered items are shown, in which the padding is made of a foamed plastic material. According to the process of the invention, the foamed plastic is made to expand inside the moulding cavity which is delimited by the two opposed half-covers 1 and 2, each of which adheres to a relative half-die 3 and 4 by effect of a depression created between the half-die 3 or 4 itself and the relative half-cover 1 and 2 by the suction pumps 5 and 6.

The process comprises the following phases.

The first half-cover 1 and the second half-cover 2 are positioned on the relative half-dies, lower 3 and upper 4 (figures 1 and 2). Each half-die is then stretched by attaching its perimeter edge to the relative stretch-frame, which latter is larger than the moulding cavity. Depressions between the bottom of the cavities of the half-dies and the relative half-covers are then induced by the suction pumps 5 and 6, to make the half-covers adhere to the bottoms of the cavities of the half-dies. This adhesion can be checked and made perfect manually, by smoothing out creases, folds and so on.

When the half-dies are perfectly laid on the bottom of the half-dies, a predetermined and batched quantity of plastic material P to be foamed is distributed inside the bottom die. The cold-foamed material is distributed over at least one of the half-covers (which is adhering by depression to the half-die), after which the two half-dies are closed one on the other to create the moulding cavity. During the whole of this phase the suction pumps are operated to guarantee that the semi-covers adhere to the half-dies. Figure 3 shows the distribution of the cold-foamed plastic material on the bottom die 3. Then the two half-dies 3 and 4 are closed to create the moulding cavity inside which the chemical reaction occurs which leads to the expansion of the plastic material constituting the padding for the seat (figure 4). The half-covers 1 and 2, having a bigger surface area than the moulding cavity, are arranged so that an edge of each half-cover lies outside the cavity and faces the corresponding edge of the other half-cover (figure 4). After expansion, when the chemical reaction expanding up the polyurethane is complete, and before opening the die, the edges of the two half-covers can be joined by low-frequency electro-welding using the annular elements 9 and 10, with the half-dies still in the closed configuration; so that a closed envelope is realised which contains the foamed plastic material, which envelope can at this point be extracted from the moulding cavity.

Once the half-covers 1 and 2 have been joined, the two half-dies 3 and 4 are opened to extract the product 12 (figures 5 and 6) which before extraction is trimmed along a line more or less following the internal edge of the stretch-frames 7 and 8. The product 12, which can be perimetrally trimmed, is a padded upholstered item, in this particular example a seat for a vehicle, welded about its edges. In further embodiments, not illustrated, the join around the joining edge of the two half-covers could be achieved using other known methods, such as sewing, gluing etc.

With only a few simple operations the process enables production of an item of padded upholstery, in particular for seats, in substance constituted by a sort of sandwich structure comprising the following three parts: the front cover, i.e. the part of the seat which comes into contact with the user; the central padding, made of foamed plastic material; and the back protection cover, which in the case of a seat has the principal function of protecting the foam from the structure the seat is mounted on, including springs, elastic straps, steel inserts and other parts which could damage the padding.

A further advantageous peculiarity of the upholstery made using the process of the object consists in the ease and speed with which it can be assembled. Further, the upholstery of the invention is easily and rapidly replaceable, even by the eventual user.

## Claims

1. A process for manufacturing padded upholstery, wherein the padding is made of an expanded plastic material, the plastic material **being** expanded inside a moulding cavity delimited by two half-covers (1 and 2), each of which two half-covers (1 and 2) adheres to one of two half-dies (3 and 4) by effect of a depression created between each of the half-dies (3 and 4) and each of the half-covers (1 and 2);
the half-covers (1 and 2) having a surface area which is greater than an area of the moulding cavity and being arranged in such a way that an edge of each half-cover is external of the moulding cavity, and faces an edge of another half-cover;
the edges of the half-covers being joined one to another so as to form a closed envelope containing the expanded plastic material, which envelope is then extracted from the moulding cavity;
**characterised in that** each half-cover (1 and 2) is positioned on a relative half-die (3 and 4) and is stretched by engaging a perimeter edge thereof in a stretch-frame (7 and 8) being of a larger size than the expansion cavity.

2. The process of claim 1, **characterised in that** it comprises phases of: positioning a first half-cover (1) on a first half-die (3) and a second half-cover (2) on a second half-die (4); creating a depression between a bottom of each half-die and the half-cover applied thereon, creating an adherence of the half-cover to the half-die; injecting a batched quantity of plastic material (P) and closing the half-dies (3 and 4) one on another in order to create a moulding cavity in which the plastic material (P) is expanded; after expansion, opening the two half-dies (3 and 4) in order to extract a final product (12).

3. The process of claim 1 or 2, **characterised in that** the edges of the half-covers are joined one to another by means of electro-welding.

4. The process of any one of the preceding claims, **characterised in that** the edges of the half-covers are joined one to another by welding elements (9, 10) positioned on each half-die (3, 4) between the perimeter of the cavity and the stretch-frame (7, 8), at the point where the half-cover is held in position.

5. The process of claim 4, **characterised in that** the welding elements (9, 10), when the half dies are in the closed position, form a welding frame situated immediately outside the moulding cavity.

6. The process of any one of the preceding claims, **characterised in that** the plastic material before expansion is distributed over at least one of the half-covers (1) which has previously been made adherent to the half-die (3) by means of the depression, before the two half-dies are closed to give rise to the moulding cavity.

7. The process of any one of the preceding claims, **characterised in that** the expansion of the plastic material (P) is realised by a cold process.

8. The process of any one of the preceding claims, **characterised in that** the process is used to manufacture upholstered items for use as seats in a vehicle.

## Patentansprüche

1. Verfahren zum Herstellen von Polsterkörpern, bei dem die Polsterung aus geschäumtem Kunststoff erzeugt wird, indem der Kunststoff in einem durch zwei Halbfutter (1 und 2) begrenzten Schäumungshohlraum geschäumt wird. Jedes der beiden Halbfutter (1 und 2) wird durch zwischen den beiden Formhälften (3 und 4) und den beiden Halbfuttern (1 und 2) erzeugten Saugdruck an jeweils eine von zwei Formhälften (3 und 4) gepresst;
die Halbfutter (1 und 2) weisen eine Oberfläche auf, die größer ist als die Oberfläche des Schäumungshohlraums, und sind so angeordnet, dass der Rand jedes Halbfutters außerhalb des Schäumungshohlraums liegt und dem Rand des anderen Halbfutters gegenüber liegt;
die Ränder der Halbfutter sind miteinander verbunden und bilden eine geschlossene Hülle, die den geschäumten Kunststoff enthält, wobei die Hülle dann aus dem Spannrahmens Schäumungshohlraum entfernt wird;
**dadurch gekennzeichnet, dass** jedes der beiden Halbfutter (1 und 2) auf einer entsprechenden Formhälfte (3 und 4) angeordnet ist und anhand eines Spannrahmens (7 und 8), der größer ist als der Schäumungshohlraum, gedehnt wird , wobei es in den äußeren Rand der Formhälfte eingreift.

2. Verfahren nach Anspruch 1 **dadurch gekennzeichnet, dass** es folgende Phasen umschließt: Platzieren eines erstes Halbfutters (1) auf einer ersten Formhälfte (3) und eines zweiten Halbfutters (2) auf einer zweiten Formhälfte (4); Erzeugung eines Saugdrucks zwischen dem Unterteil jeder Formhälfte und dem darauf liegenden Halbfutter mit der Herstellung der Haftung des Halbfutters an der Formhälfte; Einspritzen einer dosierten Menge von Kunststoff (P) und Schließen der Formhälften (3 und 4) aneinander zur Bildung eines Schäumüngshohlraums, in dem der Kunststoff (P) geschäumt wird; Öffnen der beiden Formhälften (3 und 4) nach dem Schäumvorgang zur Entfernung eines Endprodukts (12).

3. Verfahren nach Anspruch 1 oder 2 **dadurch gekennzeichnet, dass** die Ränder der Formhälften durch Elektroschweißen miteinander verbunden werden.

4. Verfahren nach einem der vorhergehenden Ansprüche **dadurch gekennzeichnet, dass** die Ränder der Halbfutter durch Schweißelemente (9, 10) miteinander verbunden werden, die auf jeder Formhälfte (3, 4) zwischen dem Umfang des Schäumungshohlraums und dem Spannrahmen (7, 8) an dem Punkt angeordnet sind, wo die Formhälften in Position gehalten werden.

5. Verfahren nach Anspruch 4 **dadurch gekennzeichnet, dass** die Schweißelemente (9, 10) einen unmittelbar außerhalb des Schäumungshohlraums angeordneten Schweißrahmen bilden, wenn die Formhälften geschlossen sind.

6. Verfahren nach einem der vorhergehenden Ansprüche **dadurch gekennzeichnet, dass** der Kunststoff vor dem Schäumen über mindestens eine der Formhälften (1) verteilt wird, die zuvor durch Erzeugung von Saugdruck zur Haftung an der Formhälfte (3) gebracht wurde, bevor sich die beiden Formhälften schließen, um den Schäumungshohlraum zu bilden.

7. Verfahren nach einem der vorhergehenden Ansprüche **dadurch gekennzeichnet, dass** das Schäumen des Kunststoffs (P) durch Kaltverfahren erfolgt.

8. Verfahren nach einem der vorhergehenden Ansprüche **dadurch gekennzeichnet, dass** das Verfahren zur Herstellung von Polsterkörpern für die Sitze von Kraftfahrzeugen eingesetzt wird.

## Revendications

1. Méthode pour la fabrication de pièces rembourrées, dans lesquelles le rembourrage est formé d'une matière plastique expansée, la matière plastique subissant une expansion au sein d'une cavité de moulage délimitée par deux demi-couvercles (1 et 2), chacun de ces deux demi-couvercles (1 et 2) adhérant à un des deux demi-moules correspondant (3 et 4), par l'effet d'une dépression qui est engendrée entre chacun des deux demi-moules (3 et 4) et chacun des demi-couvercles (1 et 2) ;
les demi-couvercles (1 et 2) présentent une surface qui est supérieure à la surface de la cavité de moulage et sont disposés de telle manière qu'un bord de chaque demi-couvercle se trouve à l'extérieur de la cavité de moulage et en face du bord d'un autre demi-couvercle ;
les bords des demi-couvercles sont raccordés l'un à l'autre de manière à former une enveloppe fermée contenant la matière plastique expansée, ladite enveloppe étant ensuite extraite de la cavité de moulage ;
**caractérisée en ce que** chaque demi-couvercle (1 et 2) est placé sur un demi-moule correspondant (3 et 4) et est étiré en engageant son bord extérieur sur un châssis d'étirement (7 et 8) présentant des dimensions supérieures à celles de la cavité d'expansion.

2. Méthode selon la revendication 1, **caractérisée en ce qu'**elle comprend les phases de :
mise en place du premier demi-couvercle (1) sur un premier demi-moule (3) et d'un second demi-couvercle (2) sur un second demi-moule (4) ; en créant une dépression entre le fond de chaque demi-moule et le demi-couvercle qui est appliqué sur celui-ci, en créant une adhésion entre le demi-couvercle et le demi-moule ; en injectant une quantité dosée de matière plastique (P) et en refermant les demi-moules (3 et 4) l'un sur l'autre, de manière à créer une cavité de moulage dans laquelle la matière plastique (P) est mise en expansion ; après l'expansion, ouverture des deux demi-moules (3 et 4), de manière à extraire le produit final (12).

3. Méthode selon la revendication 1 ou 2, **caractérisée en ce que** les bords externes des demi-couvercles sont raccordés l'un et l'autre par le biais d'une électro-soudure.

4. Méthode selon l'une des revendications précédentes, **caractérisée en ce que** les bords des demi-couvercles sont raccordés l'un à l'autre par des éléments de soudure (9,10) placés sur chaque demi-moule (3,4) entre le périmètre de la cavité et le châssis d'étirement (7,8) à l'endroit où le demi-couvercle est maintenu en place.

5. Méthode selon la revendication 4, **caractérisée en ce que** les éléments de soudure (9,10) forment, quand les demi-moules sont en position fermée, un châssis de soudure qui est situé immédiatement en dehors de la cavité de moulage.

6. Méthode selon l'une des revendications précédentes, **caractérisée en ce que** la matière plastique est répartie, avant son expansion, sur au moins un des demi-couvercles (1) qui a préalablement été rendu adhérent au demi-moule (3) au moyen d'une dépression, avant que les deux demi-moules soient refermés pour donner origine à la cavité de moulage.

7. Méthode selon l'une des revendications précédentes, **caractérisée en ce que** l'expansion de la matière plastique (P) est réalisée par une méthode à froid.

8. Méthode selon l'une des revendications précédentes, **caractérisée en ce qu'**elle est utilisée pour fabriquer des pièces rembourrés utilisées comme sièges de véhicules.
